# EUROPÄISCHE PATENTANMELDUNG

(11) **EP 4 047 137 A1**
(43) Veröffentlichungstag der Anmeldung: **24.08.2022**
(21) Anmeldenummer: 22156350.5
(22) Anmeldetag: 11.02.2022
(51) Int. Cl.: E02D 27/42, E02D 27/44, E01F 9/685, H02B 1/50

(54) **FUNDAMENT FÜR EINE SÄULE MIT INNEN GEFÜHRTEN KABELN, BEISPIELSWEISE FÜR EINE ELEKTROFAHRZEUG-LADESÄULE ODER EINEN PARKSCHEINAUTOMATEN**

(30) Priorität: 18.02.2021 DE 102021103912
(71) Anmelder: Langmatz GmbH, 82467 Garmisch-Partenkirchen (DE)
(72) Erfinder: Klaus, Hoffmann, 82467 Garmisch-Partenkirchen (DE)
(74) Vertreter: Prinz & Partner mbB

(57) **Zusammenfassung**

Ein Fundament (1) für eine Säule mit innen geführten Kabeln, beispielsweise für eine Elektrofahrzeug-Ladesäule oder einen Parkscheinautomaten, mit mehreren Wandelementen (12, 14, 16, 18) aus Kunststoff, die zusammen einen Schacht bilden, und einem Rahmen (22) aus Metall, der am oberen Ende der Wandelemente (12, 14, 16, 18) angebracht ist, wobei dem Rahmen (22) ein Adapterelement (50) zugeordnet ist, das über die Oberkante des Rahmens (22) hervorsteht.

## Beschreibung

Die Erfindung betrifft ein Fundament für eine Säule mit innen geführten Kabeln, beispielsweise für eine Elektrofahrzeug-Ladesäule oder einen Parkscheinautomaten. Andere Anwendungsbeispiele sind Ticketautomaten, Geldautomaten, Laternen und Masten für Beleuchtung oder Videoüberwachung, Reklamesäulen oder Reklamestelen, Getränke- oder Snackautomaten, Elektro-, Kabel- oder Glasfaserverteiler, Zutrittssysteme und Elektroschranken. E-Fahrrad-Ladesysteme, Pollersteuerungen. Beschneiungsanlagen, Verteilersäulen und Notrufsäulen.

An ein solches Fundament werden viele unterschiedliche Anforderungen gestellt. Zum einen soll das Fundament möglichst einfach in eine dafür vorgesehene Grube eingebracht werden können. Weiterhin soll es, wenn die Grube wieder verschlossen ist, eine hohe Stabilität aufweisen, sodass die daran befestigte Installation, bspw. die Elektrofahrfahrzeug-Ladesäule oder der Parkscheinautomat, stabil stehen. Weiterhin ist es wünschenswerte, dass die Schnittstelle zur Säule gegen Verschmutzung und Wasser geschützt ist.

Zur Lösung dieser Aufgabe ist erfindungsgemäß ein Fundament vorgesehen, beispielsweise für eine Elektrofahrzeug-Ladesäule oder einen Parkscheinautomaten, mit mehreren Wandelementen aus Kunststoff, die zusammen einen Schacht bilden, und einem Rahmen aus Metall, der am oberen Ende der Wandelemente angebracht ist, wobei dem Rahmen ein Adapterelement zugeordnet ist, das über die Oberkante des Rahmens hervorsteht. Die Verbundbauweise des Fundaments ist besonders geeignet, die unterschiedlichen Anforderungen gleichzeitig zu erfüllen. Der Schacht des Fundaments kann mit geringem Aufwand in der Grube aufgebaut werden, da die Wandelemente ein geringes Gewicht haben. Der oben auf die Wandelemente aufgesetzte Rahmen sorgt für eine hohe Festigkeit. Die eckige Form des Schachtes ermöglicht eine Maximierung der nutzbaren lichten Weite für die Aufnahme von unterschiedlichen Bohrbildern. Das Adapterelement ermöglicht es, unterschiedliche Säulen oder andere Einrichtungen an einem ansonsten identischen Fundament zu montieren; es muss nur ein angepasstes Adapterelement verwendet werden. Da das Adapterelement oberhalb der Oberkante des Rahmens (und damit auch oberhalb des Bodenniveaus) liegt, ist das Risiko minimiert, dass sich auf dem Adapterelement Schmutz oder Wasser ansammelt.

Gemäß einer Ausgestaltung der Erfindung ist vorgesehen, dass das Adapterelement in dem Rahmen aufgenommen ist. Der Rahmen dient bei dieser Ausgestaltung als seitliche Führung für das Adapterelement.

Vorzugsweise ist das Adapterelement mit dem Rahmen verschraubt, sodass sich eine besonders hohe Festigkeit ergibt.

Das Adapterelement kann abgebogene Längsränder aufweisen, die auf dem Rahmen aufliegen. Bei dieser Ausgestaltung kann das Adapterelement aus einem einzigen Bauteil durch Zuschneiden und Abkanten hergestellt werden, insbesondere wenn es aus Metallblech besteht. Insgesamt ergibt sich dadurch ein geringer Herstellungsaufwand.

Das gebogene Adapterelement hat dabei keine scharfen Kanten, um Verletzungen im Fußbereich zu verhindern, wenn Personen mit der dort montierten Säule interagieren.

Das Adapterelement ist vorzugsweise mit einer Mittenöffnung versehen, durch die elektrische Kabel zur montierten Säule geführt werden können.

Gemäß einer Ausführungsform ist das Adapterelement mit mehreren Käfigmuttern versehen, die verschiebbar so an dem Adapterelement angebracht sind, dass etwaige Toleranzen problemlos ausgeglichen werden können.

Gemäß einer Ausgestaltung der Erfindung ist eine Abdeckung vorgesehen, die auf der Oberseite des Rahmens aufliegt. Hierdurch ist ein weiterer Schutz gegen Verschmutzung und Wasser gebildet.

Das Adapterelement kann auf seiner Oberseite mit Abstandshaltern versehen sein, auf denen die Abdeckung aufliegt. Die Abstandshalter verhindern, dass sich die Abdeckungen bei Belastungen in unerwünschter Weise durchbiegt.

Vorzugsweise ist die Abdeckung in seitlicher Richtung vom Adapterelement geführt, sodass sie im montierten Zustand passgenau auf dem Rahmen aufliegt und mit diesem seitlich abschließt.

Auf der Abdeckung kann eine Blindabdeckung montiert sein, die eine Zugangsöffnung zum Fundament verschließt. Der Blinddeckel wird an der Abdeckung angebracht, solange noch keine Säule dort montiert ist.

Gemäß einer Ausgestaltung der Erfindung ist vorgesehen, dass der Rahmen mit einem Höhenverstellmechanismus versehen ist. Mit diesem kann der Rahmen, nachdem der Schacht im Erdreich montiert ist, waagrecht ausgerichtet werden, sodass die auf dem Adapterelement montierte Säule senkrecht steht.

Der Höhenverstellmechanismus kann mehrfache Spindeln aufweisen, bspw. jeweils eine für jede Ecke des Rahmens, sodass der Rahmen sehr präzise justiert werden kann.

Die Wandelemente bilden zusammen vorzugsweise einen umlaufenden Kragen, auf dem der Rahmen geführt ist. Zusätzlich zur Führungsfunktion ergibt sich hierdurch eine besonders hohe Festigkeit, da der Rahmen ähnlich wie ein umlaufendes Metallband die Wandelemente aneinander fixiert.

Gemäß einer bevorzugten Ausführungsform ist innerhalb des Schachts eine Zugentlastung angebracht, die insbesondere als Erdungsschiene ausgeführt ist. Die Zugentlastung dient dazu, die elektrischen Kabel, die vom Erdreich in den Schacht geführt und von dort weiter in die Säule geführt werden, innerhalb des Schachts geordnet aufzunehmen und zu organisieren.

Es kann ein Gussdeckel vorgesehen sein, der als Verschluss des Fundaments dient, wobei der Gussdeckel anstelle des Adapterelements auf der Oberseite des Rahmens angeordnet wird.

Die Erfindung wird nachfolgend anhand einer Ausführungsform beschrieben, die in den beigefügten Zeichnungen dargestellt ist. In diesen zeigen:
- Figur 1 ein erfindungsgemäßes Fundament in einer perspektivischen Ansicht;
- Figur 2 das Fundament von Figur 1 in einer Explosionsansicht;
- Figur 3 die Wandelemente und den Rahmen des Fundaments der Figuren 1 und 2 in einer Schnittansicht;
- Figur 4 eine beim Fundament der Figuren 1-3 verwendete Zugentlastung;
- Figur 5 eine Detailansicht eines Eckbereichs des Rahmens;
- Figur 6 in vergrößertem Maßstab den Ausschnitt VI von Figur 3;
- Figur 7 in einer vergrößerten perspektivischen Ansicht den Rahmen mit dem darin aufgenommenen Adapterelement;
- Figur 8 in einer perspektivischen Ansicht das Fundament von Figur 1, wobei auf die Abdeckung ein Blinddeckel aufgesetzt ist; und
- Figur 9 in einer perspektivischen Ansicht das Fundament, bei dem anstelle des Adapterelements ein Gussdeckel eingesetzt ist.

In den Figuren ist eine Fundament 1 gezeigt, das dazu dient, eine Installation wie eine Elektrofahrzeug-Ladesäule oder einen Parkscheinautomaten aufzunehmen.

Das Fundament 1 weist einen Schacht 10 auf, der aus mehreren miteinander verbundenen Wandelementen 12, 14, 16, 18 gebildet ist. Im gezeigten Ausführungsbeispiel werden vier Wandelemente verwendet.

Die Wandelemente 12, 14, 16, 18 bestehen aus Kunststoff und haben eine rechteckige Form. Sie sind so zusammengesetzt, dass der Schacht 10 mit ebenfalls rechteckigem Querschnitt gebildet ist.

Durch Sollbruchstellen im Schacht 10 (genauer gesagt in den Wandelementen 12, 14, 16, 18) können die elektrischen Kabel an verschiedenen Stellen in den Schacht eingeführt werden. Mittels geeigneter Abdichtung an den Einführungspunkten ist der Schacht 10 zudem vor Verschmutzung geschützt.

Auf der Seite, die im installierten Zustand oben ist, ist jedes Wandelement mit einem Kragenteil 20 versehen, sodass ein insgesamt umlaufender, rechteckiger Kragen gebildet ist.

Von den Kragenteilen 20 geführt ist am Schacht 10 ein umlaufender Rahmen 22 aus Metall angebracht. Der Rahmen sorgt für die Stabilität des Fundaments am oberen Ende. Insbesondere gewährleistet der Rahmen, dass die Wandelement 12, 14,1 6,18 an ihren oberen Enden zusammengehalten werden.

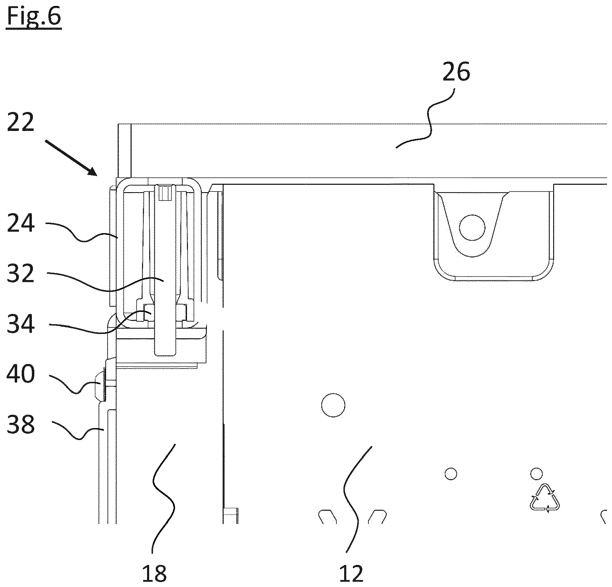

Jede Längsseite des Rahmens 22 ist gebildet durch ein Hohlprofil 24 (siehe insbesondere Figur 6). Als Material ist insbesondere verzinktes Stahlblech oder Edelstahl geeignet.

Auf der Oberseite der Hohlprofile 24 sind vier Randleisten 26 angebracht, sodass ein allseitig umlaufender Rand gebildet ist.

Auch die Randleisten 26 bestehen aus Metall.

Die Oberkante des Rahmens 22, genauer gesagt die Oberkante der Randleisten 26, befindet sich im montierten Zustand des Fundaments auf Bodenniveau.

Der Rahmen 22 ist mit einem Höhenverstellmechanismus 30 versehen, der dazu dient, den Rahmen 22 relativ zum Schacht 10 auszurichten.

Der Höhenverstellmechanismus 30 weist hier als zentralen Bestandteil mehrere Spindeln 32 auf (siehe insbesondere Figur 6), die in eine Mutter 34 eingreifen, die fest am entsprechenden Hohlprofil 24 angeordnet ist. Vorzugsweise ist jeweils eine Spindel 32 in der Nähe einer Ecke des Rahmens 22 angeordnet.

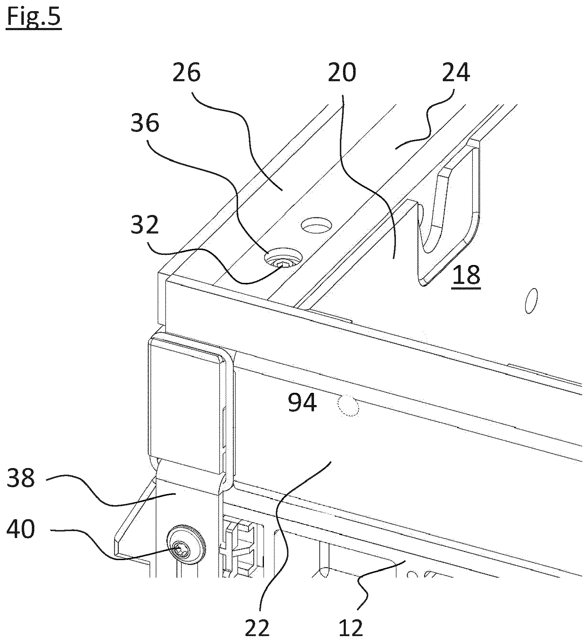

Wenn die Spindel 32 nach unten geschraubt wird (siehe die in Figur 5 zu sehende Zugangsöffnung 36 im entsprechenden Hohlprofil 24), kann die entsprechende Ecke des Rahmens vom Schacht nach oben verstellt werden. Hierdurch kann der Rahmen 22 präzise waagrecht ausgerichtet werden, sodass eine später an dem Fundament montierte Säule exakt senkrecht ausgerichtet ist.

Nachdem der Rahmen 22 eingestellt ist, kann ein Verriegelungsblech 38 mittels einer Verriegelungsschraube 40 in der entsprechenden Position arretiert werden, sodass der Rahmen nicht nach oben abgehoben werden kann.

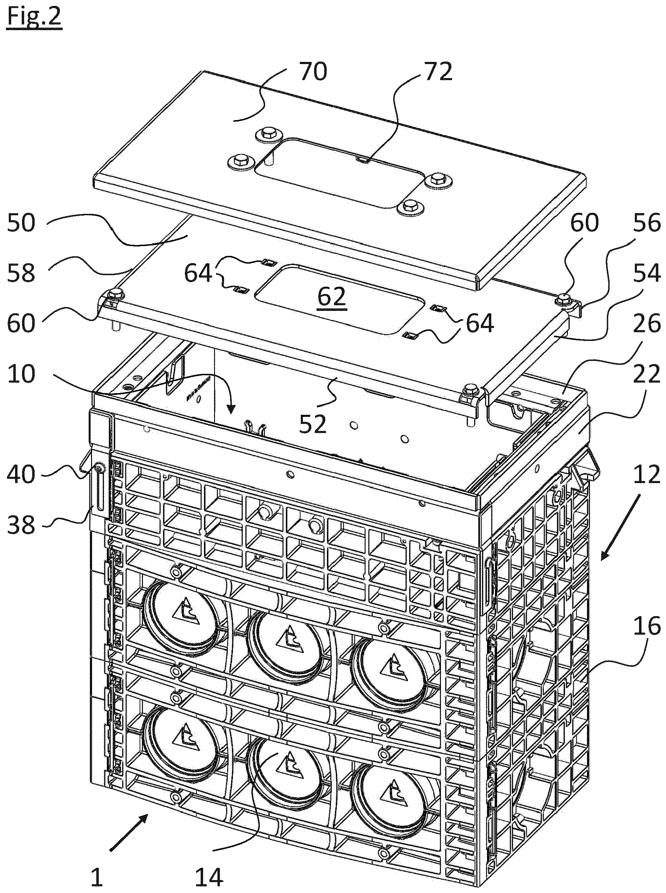

Im Rahmen 22 ist ein Adapterelement 50 angeordnet (siehe Figur 2), das hier als Platte aus Metallblech ausgeführt ist. Das Adapterelement 50 dient dazu, unterschiedliche Ladesäulen, Parkscheinautomaten oder andere Installationen auf dem Fundament 1 montieren zu können. Zu diesem Zweck ist jedes Adapterelement 50 mit seinem Lochbild an das entsprechende Bauteil angepasst.

Wesentliches Merkmal des Adapterelements 50 ist, dass es im Rahmen 22 so angeordnet ist, dass seine Oberkante oberhalb der Oberkante des Rahmens 22 liegt, also oberhalb der Oberkante der Randleisten 26.

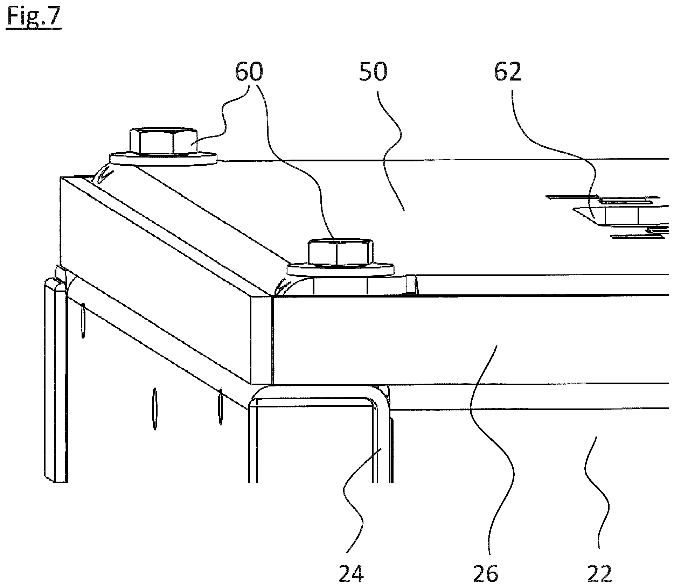

Das Adapterelement 50 ist mit vier abgebogenen Längsrändern 52, 54, 56, 58 versehen, deren Höhe der Höhe der Randleisten 26 entspricht (gemessen auf der Innenseite des Adapterelements 50). Im montierten Zustand liegen also die Stirnflächen der abgebogenen Längsränder 52, 54, 56, 58 auf der Oberseite der Hohlprofile 24 auf, und die Oberseite des Adapterelements 50 liegt oberhalb des Rahmens 22 (siehe insbesondere Figur 7).

In jeder Ecke des Adapterelements 50 ist eine Befestigungsschraube 60 vorgesehen, mit der das Adapterelement 50 fest mit Rahmen 22 verschraubt werden kann.

Das Adapterelement 50 weist weiterhin als Zugangsöffnung eine Mittenöffnung 62 auf, durch die hindurch Versorgungskabel für die Säule hindurchgeführt werden können.

In der Nähe des Randes der Mittenöffnung 62 sind mehrere Befestigungspunkte 64 vorgesehen, die hier als Käfigmuttern ausgeführt sind. Mit diesen kann die Säue fest mit dem Adapterelement 50 verschraubt werden.

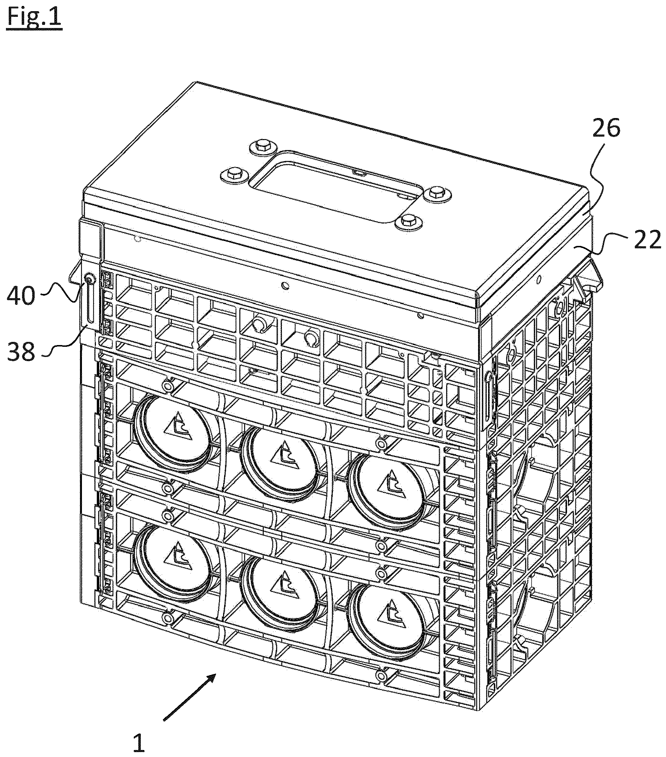

Auf dem Adapterelement 50 kann eine Abdeckung 70 montiert werden (siehe insbesondere die Figuren 1 und 2), die auf den Randleisten 26 des Rahmens 22 aufliegt. Dabei wird die Abdeckung 70 in seitlicher Richtung von dem über die Oberseite des Rahmens 22 hervorstehenden Adapterelement 50 geführt.

Die Abdeckung 70 ist vorzugsweise aus Stahlblech mit ebenfalls abgebogenen Längsrändern gebildet.

Auf der Oberseite des Adapterelements 50 können mehrere Abstandshalter 72 angebracht sein.

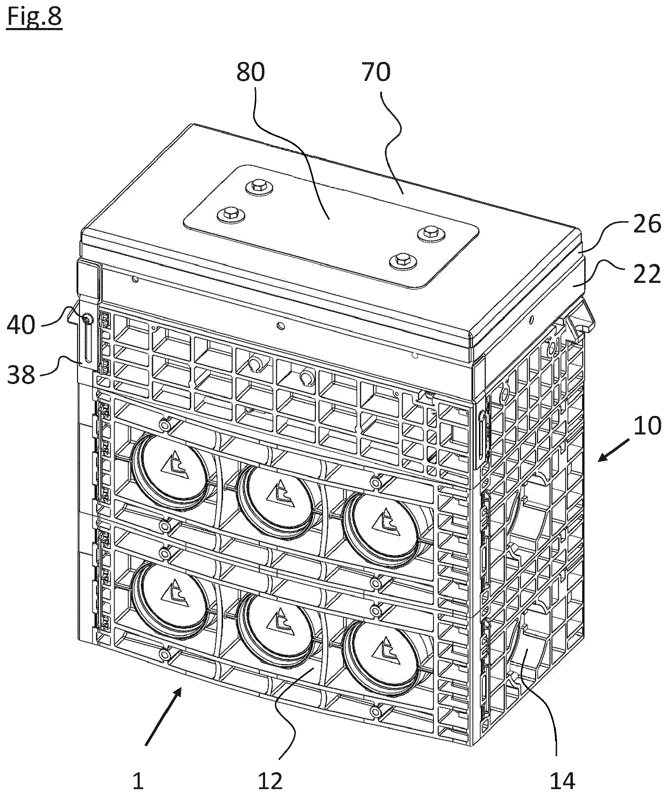

Die Abdeckung 70 weist ebenfalls eine Mittenöffnung auf. Diese kann durch eine Blindabdeckung 80 (siehe Figur 8) verschlossen sein, die auf der Abdeckung 70 montiert wird.

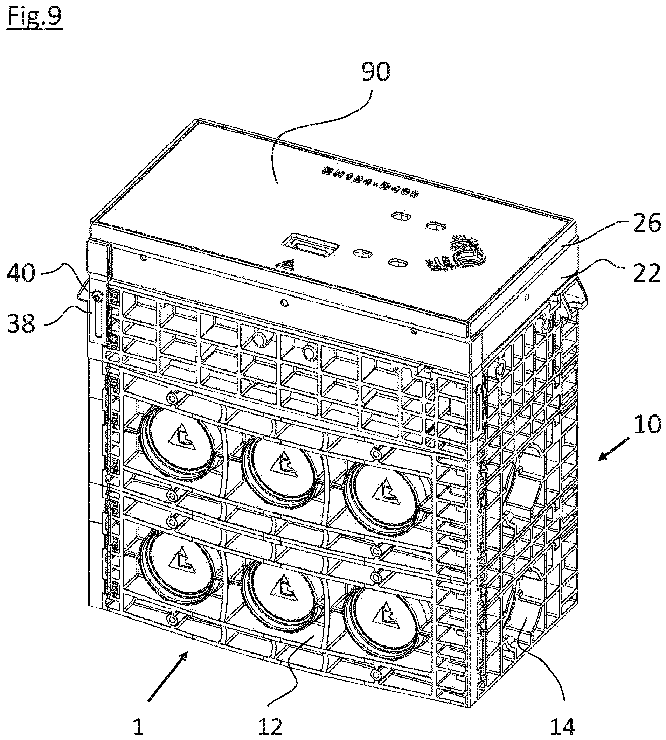

In Figur 9 ist ein Gussdeckel 90 gezeigt, der anstelle des Adapterelements 50 temporär angebracht werden kann.

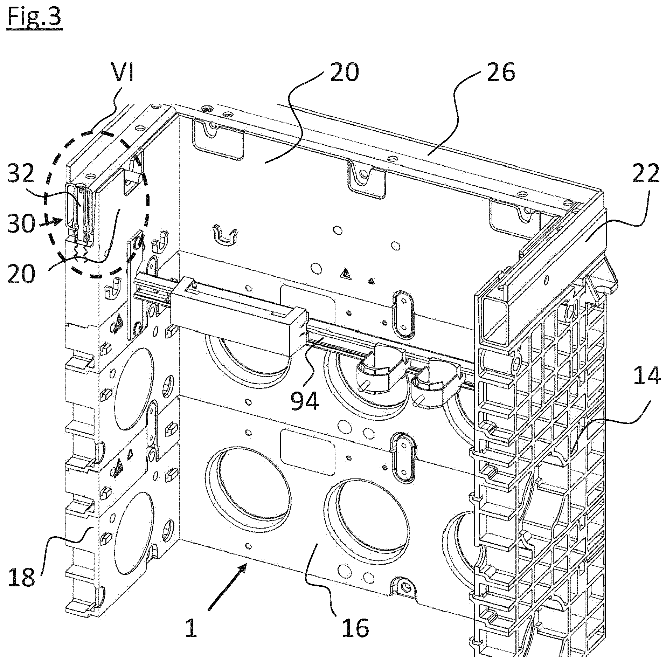

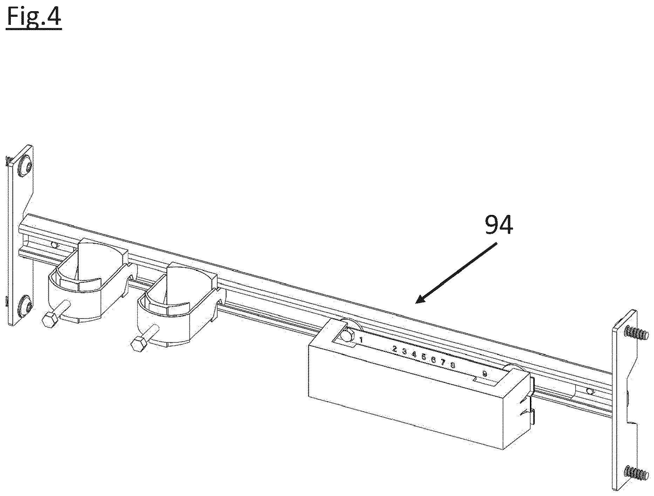

Innerhalb des von den Wandelementen 12, 14, 16, 18 gebildeten Schachts ist eine Zugentlastung 94 (siehe insbesondere die Figuren 3 und 4) vorgesehen, die hier als C-Profil-Schiene ausgeführt ist. Die Zugentlastung 94 erstreckt sich entlang der längeren Richtung durch den Schacht, ist also an den beiden kürzeren Wandelementen 14, 18 angebracht, beispielsweise mit EJOT-Schrauben.

Die C-Profil-Schiene nimmt die Potentialausgleichsschiene zur Anbindung der notwendigen Erdung aus der Säule auf, die hier einfach angebracht und einfach weitere in die umliegende Erde geführt werden kann. Sie ist mit Schellen zur Aufnahme von Kabeln versehen, sodass eine Zugentlastungsfunktion verwirklicht werden kann, sowie mit Erdungskontakten.

Die C-Schiene kann mittels handelsüblichen EJOT Schrauben beliebig an die Schachtwand geschraubt werden.

## Patentansprüche

1. Fundament (1) für eine Säule mit innen geführten Kabeln, beispielsweise für eine Elektrofahrzeug-Ladesäule oder einen Parkscheinautomaten, mit mehreren Wandelementen (12, 14, 16, 18) aus Kunststoff, die zusammen einen Schacht bilden, und einem Rahmen (22) aus Metall, der am oberen Ende der Wandelemente (12, 14, 16, 18) angebracht ist, wobei dem Rahmen (22) ein Adapterelement (50) zugeordnet ist, das über die Oberkante des Rahmens (22) hervorsteht.

2. Fundament (1) nach Anspruch 1, **dadurch gekennzeichnet, dass** das Adapterelement (50) in dem Rahmen (22) aufgenommen ist.

3. Fundament (1) nach Anspruch 1 oder Anspruch 2, **dadurch gekennzeichnet, dass** das Adapterelement (50) mit dem Rahmen (22) verschraubt ist.

4. Fundament (1) nach einem der vorhergehenden Ansprüche, **dadurch gekennzeichnet, dass** das Adapterelement (50) abgebogene Längsränder (52, 54, 56, 58) aufweist, die auf dem Rahmen (22) aufliegen.

5. Fundament (1) nach einem der vorhergehenden Ansprüche, **dadurch gekennzeichnet, dass** das Adapterelement (50) mit einer Mittenöffnung (62) versehen ist.

6. Fundament (1) nach einem der vorhergehenden Ansprüche, **dadurch gekennzeichnet, dass** das Adapterelement (50) mit mehreren Käfigmuttern (64) versehen ist.

7. Fundament (1) nach einem der vorhergehenden Ansprüche, **dadurch gekennzeichnet, dass** eine Abdeckung (70) vorgesehen ist, die auf der Oberseite des Rahmens (22) aufliegt.

8. Fundament (1) nach Anspruch 7, **dadurch gekennzeichnet, dass** das Adapterelement (50) auf seiner Oberseite mit Abstandshaltern (72) versehen ist, auf denen die Abdeckung (70) aufliegt.

9. Fundament (1) nach Anspruch 7 oder Anspruch 8, **dadurch gekennzeichnet, dass** die Abdeckung (70) in seitlicher Richtung vom Adapterelement (50) geführt wird.

10. Fundament (1) nach einem der Ansprüche 7 bis 9, **dadurch gekennzeichnet, dass** eine Blindabdeckung (80) auf der Abdeckung (70) montiert ist, die eine Zugangsöffnung (62) zum Fundament (1) verschließt.

11. Fundament (1) nach einem der vorhergehenden Ansprüche, **dadurch gekennzeichnet, dass** der Rahmen (22) mit einem Höhenverstellmechanismus (30) versehen ist.

12. Fundament (1) nach Anspruch 11, **dadurch gekennzeichnet, dass** der Höhenverstellmechanismus (30) mehrere Spindeln (32) aufweist.

13. Fundament (1) nach einem der vorhergehenden Ansprüche, **dadurch gekennzeichnet, dass** die Wandelemente (12, 14, 16, 18) zusammen einen umlaufenden Kragen (20) bilden, auf dem der Rahmen (22) geführt ist.

14. Fundament (1) nach einem der vorhergehenden Ansprüche, **dadurch gekennzeichnet, dass** innerhalb des Schachts eine Zugentlastung (94) angebracht ist, die insbesondere als Erdungsschiene ausgeführt ist.

15. Fundament (1) nach einem der vorhergehenden Ansprüche, **dadurch gekennzeichnet, dass** ein Gussdeckel (90) vorgesehen ist, der als Verschluss des Fundaments (1) dient.
